(19) Europäisches Patentamt
European Patent Office
Office européen des brevets

(11) Veröffentlichungsnummer: **0 253 142**
A1

# (12) EUROPÄISCHE PATENTANMELDUNG

(21) Anmeldenummer: 87108600.5

(22) Anmeldetag: 15.06.87

(51) Int. Cl.⁴: **B 01 J 23/74**, C 01 B 7/03

(30) Priorität: 17.07.86 DE 3624174

(43) Veröffentlichungstag der Anmeldung: 20.01.88
Patentblatt 88/3

(84) Benannte Vertragsstaaten: DE GB NL

(71) Anmelder: HOECHST AKTIENGESELLSCHAFT,
Postfach 80 03 20, D-6230 Frankfurt am Main 80 (DE)

(72) Erfinder: Jödden, Klaus, Dr., Neustrasse 66,
D-5042 Erftstadt (DE)
Erfinder: Heymer, Gero, Dr., Fasanenaue 12,
D-5042 Erftstadt (DE)

(54) **Eisenoxid-Katalysator und seine Anwendung bei der Gewinnung von Chlor durch Oxygenierung von Eisenchloriden.**

(57) Einen Eisenoxid-Katalysator mit einer BET-Oberfläche von 2 bis 8 $m^2/g$ kann man dadurch herstellen, dass man zunächst gasförmiges Eisenchlorid mit Sauerstoff oder sauerstoffhaltigen Gasen bei Temperaturen von 750 bis 1050 °C umsetzt. Nach gemeinsamer Abscheidung des gebildeten feinteiligen Eisenoxids und des nicht umgesetzten Eisenchlorids suspendiert man Eisenoxid und Eisenchlorid in Wasser. Aus der Suspension filtriert man das Eisenoxid ab und trocknet es bei Temperaturen von 200 bis 300 °C. Schliesslich zerkleinert man das getrocknete Eisenoxid.

EP 0 253 142 A1

Eisenoxid-Katalysator und seine Anwendung bei der Gewinnung von Chlor durch Oxygenierung von Eisenchloriden

Die vorliegende Erfindung betrifft einen Eisenoxid-Katalysator sowie ein Verfahren zur Gewinnung von Chlor durch Umsetzung von gasförmigem Eisenchlorid mit Sauerstoff, gegebenenfalls im Gemisch mit Stickstoff und/oder Chlor an einer Schüttung aus Eisenoxid bei Temperaturen unterhalb von 800°C.

Aus der GB-PS 992 317 ist es bekannt, gasförmiges Eisen-III-chlorid, welches bei der Chlorierung von Ilmenit angefallen ist, zusammen mit Sauerstoff durch eine auf etwa 800°C erhitzte, fluidisierte Schüttung von Eisenoxid mit einer Teilchengröße von 89 bis 178 μm zu leiten, wobei ein Gasgemisch erhalten wird, welches etwa zur Hälfte aus Chlor besteht.

Nachteilig ist bei dem bekannten Verfahren, daß der Umwandlungsgrad unzureichend ist, was offensichtlich auf die mangelnde katalytische Aktivität des verwendeten Eisenoxids zurückzuführen ist. Versucht man, die mangelnde Katalysator-Aktivität durch Erhöhung der Umsetzungstemperatur auszugleichen, so bringt dies durch Verschiebung des chemischen Gleichgewichtes eine Verringerung der Chlorausbeute mit sich.

Es ist daher Aufgabe der vorliegenden Erfindung, einen Eisenoxid-Katalysator anzugeben, welcher bei der Oxygenierung von Eisenchlorid die Erzielung einer hohen Chlorausbeute erlaubt. Das wird erfindungsgemäß dadurch erreicht, daß der Eisenoxid-Katalystor, welcher eine BET-Oberfläche von 2 bis 8 $m^2$/g aufweist, durch Umsetzung von gasförmigem Eisenchlorid mit Sauerstoff oder sauerstoffhaltigem Eisen bei Temperaturen von 750 bis 1050°C, gemeinsame Abscheidung des gebildeten feinteiligen Eisenoxids und des nicht umgesetzten Eisenchlorids, Suspendieren des Eisenoxids und Eisenchlorids in Wasser, Abfiltrieren des Eisenoxids, Trocknen des Eisenoxids bei Temperaturen von 200 bis 500°C sowie Zerkleinern des getrockneten Eisenoxids he stellbar ist.

Der Eisenoxid-Katalysator gemäß der Erfindung kann weiterhin wahlweise auch noch dadurch ausgestaltet sein, daß bei seiner Herstellung

a) die Umsetzung in einer senkrecht angeordneten Reaktionszone vorgenommen wird,

b) die Strömungsgeschwindigkeit in der Reaktionszone 10 bis 80 cm/s beträgt und

c) man vom zerkleinerten, trockenen Eisenoxid die Siebfraktion < 0,5 mm abtrennt und verwirft.

Schließlich kann der erfindungsgemäße Eisenoxid-Katalysator die Schüttung bilden, an welcher bei einem Verfahren zur Gewinnung von Chlor gasförmiges Eisenchlorid mit Sauerstoff, gegebenenfalls im Gemisch mit Stickstoff und/oder Chlor, bei Temperaturen unterhalb von 800°C umgesetzt wird.

Eisenchlorid ist im Rahmen der Erfindung Eisen-II-chlorid und/oder Eisen-III-chlorid, wobei Eisen-III-chlorid wegen seiner niedrigeren Verdampfungstemperatur vorzuziehen ist.

Beim erfindungsgemäßen Verfahren können die sauerstoffhaltigen Gase, welche mit dem gasförmigem Eisenchlorid umgesetzt werden, auch Chlor enthalten.

Mit dem Eisenoxid-Katalysator gemäß der Erfindung werden auf das durchgesetzte Eisenchlorid bezogene Chlorausbeuten von mehr als 90 % erhalten.

Beispiel 1  (gemäß der Erfindung)

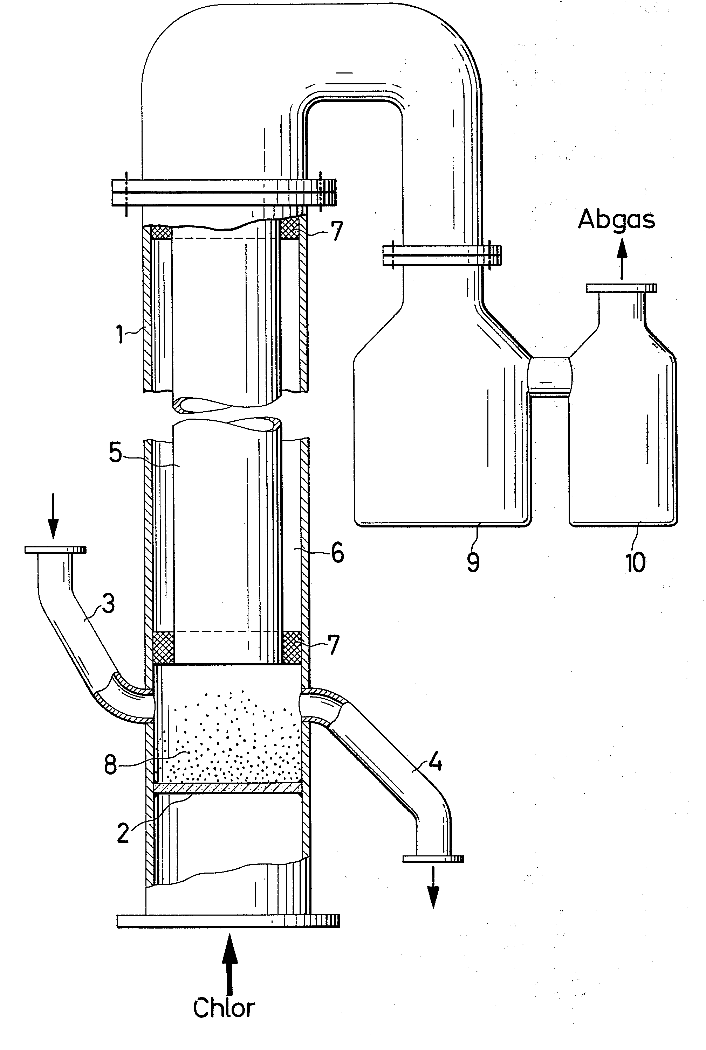

In ein als Reaktor dienendes, 300 cm langes Quarzrohr 1 (vergl. die Figur) war 20 cm von seinem unteren Ende entfernt eine D1-Fritte 2 eingeschmolzen, während das Quarzrohr 1 etwa 10 cm oberhalb der D1-Fritte 2 einerseits mit einem nach oben weisenden ersten Stutzen 3 zum Eintrag von Ilmenit und andererseits auf seiner entgegengesetzten Seite mit einem nach unten weisenden zweiten Stutzen 4 zum Austragen von synthetischem Rutil versehen war. Oberhalb beider Stutzen (3, 4) war das Quarzrohr 1 zum Schutz vor dem Angriff durch aggressive gasförmige Metallchloride mit einem Rohr 5 aus $Al_2O_3$-Keramik (Ø 5o mm) ausgekleidet, wobei der Ringraum 6 zwischen dem Rohr 5 und dem Quarzrohr 1 nahe dem oberen und unteren Ende des Rohres 5 durch Dichtungen 7 verschlossen war. Die Chloreinleitung in das Quarzrohr 1 erfolgte von unten her, wodurch oberhalb der D1-Fritte 2 eine Wirbelschicht 8 ausgebildet wurde. Der die Chlorierungszone bildende, untere, bis 10 cm oberhalb der Stutzen (3, 4) reichende Teil des Quarzrohres 1 war mit einer Heizwicklung versehen, während die sich an die Chlorierungszone nach oben anschließende Oxygenierungszone (Länge: 260 cm; Reaktionsvolumen: 3570 $cm^3$) von elektrisch beheizbaren Rohröfen umgeben war.

Nach Erhitzen des Quarzrohres 1 im Bereich der Chlorierungszone mit Hilfe der Heizwicklung auf 1050°C wurden 1,5 kg/h Ilmenit (Zusammensetzung: 53,7 % $TiO_2$; 20,7 % FeO; 21,5 % $Fe_2O_3$; 0,9 % $Al_2O_3$; 0,5 % $SiO_2$; 0,01 % CaO; 1,4 % MnO; 0,01 % $V_2O_5$) durch ein Zellenrad in den ersten Stutzen 3 dosiert, während von unten her 500 l/h Chlorgas eingeleitet wurden. Die aus der Chlorierungszone abströmende, im wesentlichen aus Eisenchloriden, Chlor und Sau-

erstoff bestehende Gasphase wurde mit einer auf Chlor bezogenen Verweilzeit von 7 s durch die im Temperaturbereich von 9oo bis 750°C gehaltene Oxygenierungszone geleitet. Der dabei gebildete Eisenoxid-Staub und nicht umgesetzte Eisenchloride wurden in nachgeschalteten, auf einer Temperatur von etwa 70°C gehaltenen Staubabscheidern (9, 10) abgetrennt.

Die Ilmenit-Dosierung wurde 2 Stunden unter gleichzeitiger Einleitung von 3,04 kg Chlorgas durchgeführt. Der aus der Chlorierungszone durch den zweiten Stutzen 4 ausgetragene synthetische Rutil enthielt 94,6 % $TiO_2$.

Das in den nachgeschalteten Staubabscheidern (9, 10) enthaltene Gemisch aus Eisenoxiden und Eisenchloriden (im wesentlichen $Fe_2O_3$ und $FeCl_3$) wurde in 2 1 Wasser aufgeschlämmt, abfiltriert und der Filterkuchen solange mit Wasser gewaschen, bis das Filtrat farblos ablief. Der Filterkuchen wurde bei 250°C getrocknet sowie anschließend grob zerkleinert und durch ein 2 mm-Sieb gerieben. Nach Abtrennen der Feinanteile unter 0,5 mm wies der resultierende Eisenoxid-Katalysator eine BET-Oberfläche (vergl. J. Am. Chem. Soc. 60 (1938) 3o9) von 3,7 $m^2$/g auf.

loo7 g dieses Eisenoxid-Katalysators wurden zur Oxygenierung von $FeCl_3$ in ein Quarzrohr (∅ 6o mm; Länge: 5oo cm) mit eingeschmolzener Fritte eingefüllt, wobei die Schütthöhe 40 cm betrug. Die Temperatur in der Mitte der Schüttung wurde durch eine das Rohr umgebende Heizwicklung auf 676°C eingestellt. Aus einem dem Quarzrohr vorgeschalteten, waagerecht angeordneten Rohr wurden 263 g $FeCl_3$ bei etwa 360°C während 40 Minuten verdampft und gemeinsam mit 49 1/h Sauerstoff und 23 1/h Stickstoff durch die Schüttung des Eisenoxid-Katalysators hindurchgeleitet. Dabei stieg die Temperatur im unteren Teil der Schüttung (10 cm oberhalb der Fritte) von 517 auf 541°C und in der Mitte der Schüttung auf 692°C an, während die Temperatur im oberen Drittel der Schüttung unverändert 760 und 770°C blieb. Nicht umgesetztes $FeCl_3$ wurde in einem nachgeschalteten Behälter abgeschieden. Das bei der katalytischen Oxygenierung gebildete Chlor wurde zum größten Teil kondensiert; unkondensierte Anteile wurden mit Natronlauge ausgewaschen. Die Chlorausbeute betrug 92 %, bezogen auf das durchgesetzte $FeCl_3$.

Beispiel 2 (gemäß der Erfindung)

Der Oxygenierungs-Schritt gemäß Beispiel 1 wurde mit folgenden Änderungen wiederholt:

Es wurden 536 g Eisenoxid-Katalysator aus Beispiel 1 eingesetzt, wobei die Schütthöhe etwa 20 cm betrug. 183 g $FeCl_3$ wurden im Laufe von 60 Minuten verdampft und zusammen mit 38 l/h Sauerstoff durch die Schüttung des Eisenoxid-Katalysators geleitet. Dabei stieg die Temperatur im unteren Teil der Schüttung von 578°C auf 629°C an, während die Temperatur in der Mitte nahezu unverändert 69o°C betrug. Die Chlorausbeute betrug 97 %, bezogen auf das durchgesetzte $FeCl_3$.

Beispiel 3 (gemäß der Erfindung)

Beispiel 2 wurde mit der Änderung wiederholt, daß im unteren Teil der Schüttung eine Temperatur von 551°C eingestellt wurde. Das Gemisch von gasförmigem $FeCl_3$ und Sauerstoff wurde 50 Minuten durch die Schüttung des Eisenoxid-Katalysators geleitet, wobei die Temperatur im unteren Teil der Schüttung auf 591°C anstieg, während die Temperatur im mittleren Teil 7o4°C betrug. Die Chlorausbeute betrug 98 %, bezogen auf das durchgesetzte $FeCl_3$.

Beispiel 4 (Vergleichsbeispiel)

Handelsübliches $Fe_2O_3$ (Riedel de Haen, chem. rein) wurde mit Wasser angeteigt, bei 250°C getrocknet und anschließend durch ein 2 mm-Sieb gerieben. Nach Abtrennen der Feinanteile unter 0,5 mm wies das Eisenoxid eine BET-Oberfläche von 9,5 $m^2$/g auf.

500 g dieses Eisenoxids wurden in das Oxygenierungs-Quarzrohr gemäß Beispiel 1 eingefüllt. Die Temperaturen im unteren bzw. mittleren Bereich der Schüttung wurden auf 540 bzw. 570°C eingestellt. Im Laufe von 60 Minuten wurden 43 g $FeCl_3$ verdampft und gemeinsam mit 5 l/h Sauerstoff durch die Schüttung geleitet. Dabei blieben die Temperaturen im unteren und mittleren Bereich der Schüttung unverändert. Die Chlorausbeute betrug 21 %, bezogen auf das durchgesetzte $FeCl_3$.

Eisenoxid-Katalysator und seine Anwendung bei der Gewinnung von Chlor durch Oxygenierung von Eisenchloriden

Patentansprüche:

1. Eisenoxid-Katalysator, dadurch gekennzeichnet, daß er
   eine BET-Oberfläche von 2 bis 8 m²/g aufweist und herstellbar ist durch Umsetzung von gasförmigem Eisenchlorid mit Sauerstoff oder sauerstoffhaltigen Gasen
   bei Temperaturen von 750 bis 1050°C, gemeinsame Abscheidung des gebildeten feinteiligen Eisenoxids und
   des unumgesetzten Eisenchlorids, Suspendieren des Eisenoxids und Eisenchlorids in Wasser, Abfiltrieren des
   Eisenoxids, Trocknen des Eisenoxids bei Temperaturen
   von 200 bis 500°C sowie Zerkleinern des getrockneten
   Eisenoxids.

2. Eisenoxid-Katalysator nach Anspruch 1, dadurch gekennzeichnet, daß die Umsetzung in einer senkrecht angeordneten Reaktionszone vorgenommen wird.

3. Eisenoxid-Katalysator nach Anspruch 1 oder 2, dadurch
   gekennzeichnet, daß die Strömungsgeschwindigkeit in
   der Reaktionszone 10 bis 80 cm/s beträgt.

4. Eisenoxid-Katalysator nach mindestens einem der Ansprüche
   1 bis 3, dadurch gekennzeichnet, daß man vom zerkleinerten, trockenen Eisenoxid die Siebfraktion < 0,5 mm abtrennt
   und verwirft.

5. Verfahren zur Gewinnung von Chlor durch Umsetzung von gasförmigem Eisenchlorid mit Sauerstoff, gegebenenfalls im Gemisch mit Stickstoff und/oder Chlor, an einer Schüttung aus Eisenoxid bei Temperaturen unterhalb von 800°C, dadurch gekennzeichnet, daß die Schüttung im wesentlichen den Eisenoxid-Katalysator nach mindestens einem der Ansprüche 1 bis 4 enthält.

Abgas

Chlor

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 020 643 (MINERAL PROCESS LICENSING) | | B 01 J 23/74<br>C 01 B 7/03 |
| A | US-A-4 144 316 (HAACK) | | |
| A | EP-A-0 174 078 (I.C.I.) | | |
| D,A | GB-A- 992 317 (BRITISH TITAN PRODUCTS) | | |

RECHERCHIERTE SACHGEBIETE (Int. Cl.4)

B 01 J
C 01 B

Der vorliegende Recherchenbericht wurde für alle Patentansprüche erstellt.

| Recherchenort | Abschlußdatum der Recherche | Prüfer |
|---|---|---|
| DEN HAAG | 13-10-1987 | LO CONTE C. |